# EUROPÄISCHE PATENTSCHRIFT

(11) **EP 0 897 430 B1**
(45) Veröffentlichungstag und Bekanntmachung des Hinweises auf die Patenterteilung: **14.11.2001**
(21) Anmeldenummer: 98901867.6
(22) Anmeldetag: 10.02.1998
(51) Int. Cl.: C21B 13/14

(54) **VERFAHREN ZUR HERSTELLUNG VON FLÜSSIGEM ROHEISEN ODER FLÜSSIGEN STAHLVORPRODUKTEN**
METHOD OF PRODUCING LIQUID CRUDE IRON OR LIQUID STEEL FABRICATED MATERIALS
PROCEDE DE PRODUCTION DE FONTE BRUTE LIQUIDE OU DE PRODUITS DE DEPART LIQUIDES EN ACIER

(30) Priorität: 11.02.1997 AT 21897
(43) Veröffentlichungstag der Anmeldung: 24.02.1999
(73) Patentinhaber: VOEST-ALPINE INDUSTRIEANLAGENBAU GMBH, 4020 Linz (AT)
(72) Erfinder: WIESINGER, Horst, A-4020 Linz (AT)
(74) Vertreter: Kopecky, Helmut, Dipl.-Ing.
(86) Internationale Anmeldenummer: AT9800027
(87) Internationale Veröffentlichungsnummer: WO9835064

(56) Entgegenhaltungen:
- EP-A- 0 316 819
- EP-A- 0 594 557
- WO-A-96/12045
- DE-C- 4 240 194

## Beschreibung

Die Erfindung betrifft ein Verfahren zur Herstellung von flüssigem Roheisen oder flüssigen Stahlvorprodukten aus eisenoxidhältigem Material, wobei feinteilchenförmiges eisenoxidhältiges Material mit Hilfe eines Reduktionsgases in mindestens einer Wirbelschicht-Reduktionsstufe im Wirbelbettverfahren zu feinteilchenförmigem Eisenschwamm und wobei weiters stückiges Erz in einer Festbett-Reduktionsstufe zu stückigem Eisenschwamm reduziert wird und der Eisenschwamm in eine Einschmelzvergasungszone eingebracht und dort unter Zufuhr von Kohlenstoffträgern und sauerstoffhältigem Gas erschmolzen wird, wobei ein CO- und H₂-hältiges Reduktionsgas zur Reduktion des eisenoxidhältigen Materials erzeugt wird, sowie eine Anlage zur Durchführung des Verfahrens.

Ein Verfahren dieser Art, mit welchem sich nicht nur stückiges Erz, sondern auch Feinerz verarbeiten läßt und das eine große Variationsmöglichkeit hinsichtlich der eingesetzten stückigen Erz- und Feinerzmengen im Verhältnis zur insgesamt eingesetzten Erzmenge ermöglicht, ist aus der WO-A - 96/12045 bekannt. Hierbei wird der aus Feinerz erzeugte feinteilchenförmige Eisenschwamm zwecks leichterer Handhabung brikettiert und in einem Kompakthüttenwerk, beispielsweise ausgestattet mit Elektroöfen und Konvertern, weiterverarbeitet. Falls erforderlich, kann der brikettierte Eisenschwamm auch in der Einschmelzvergasungszone eingeschmolzen werden, insbesondere dann, wenn in der Einschmelzvergasungszone überschüssige Energie zur Verfügung steht.

Nachteilig ist hierbei die Brikettierung des aus Feinerz gebildeten feinteilchenförmigen Eisenschwammes, die jedoch gemäß der WO-A - 96/12045 in Kauf genommen wird, da die Einbringung von feinteilchenförmigem Eisenschwamm in die Einschmelzvergasungszone einen Sonderfall darstellt, der nur dann verwirklicht wird, wenn in der Einschmelzvergasungszone überschüssige Energie zur Verfügung steht. Generell ist gemäß der WO-A - 96/12045 nur daran gedacht, aus dem feinteilchenförmigen Eisenschwamm Briketts zu bilden, die dann für die Weiterleitung in ein Kompakthüttenwerk besonders einfach handhabbar sind.

Die Erfindung stellt sich die Aufgabe, dieses bekannte Verfahren und die Anlage hierzu dahingehend weiterzubilden, daß eine Brikettierung des feinteilchenförmigen Eisenschwammes nicht mehr erforderlich ist, wobei jedoch die Weiterverarbeitung des feinteilchenförmigen Eisenschwammes keinerlei Schwierigkeiten verursacht. Insbesondere soll eine Sonderbehandlung des feinteilchenförmigen Eisenschwammes getrennt vom stückigen Eisenschwamm vermieden werden, so daß keine zusätzlichen Kosten, insbesondere keine Kosten für zusätzliche Investitionen von Anlagenteilen anfallen.

Diese Aufgabe wird erfindungsgemäß dadurch gelöst, daß der feinteilchenförmige Eisenschwamm in unaufbereitetem Zustand und feinteilchenförmiger Form direkt in die Einschmelzvergasungszone eingebracht und in dieser gemeinsam mit dem stückigen Eisenschwamm eingeschmolzen wird. Dadurch, daß der gesamte feinteilchenförmige Eisenschwamm in der Einschmelzvergasungszone aufgeschmolzen bzw. vorher gegebenenfalls fertigreduziert wird, ist erfindungsgemäß die Einschmelzvergasungszone derart ausgebildet, daß stets der gesamte Einsatz von eisenoxidhältigem Material, also sowohl des feinteilchenförmigen als auch des stückigen eisenoxidhältigen Materials, verarbeitet werden kann. Erfindungsgemäß brauchen daher nur mehr flüssiges Roheisen oder flüssige Stahlvorprodukte einem Stahlwerk zugeführt werden, wodurch sich die Weiterbehandlung, also das Herstellen von Stahl, wesentlich vereinfacht. Gegenüber der Lehre der WO-A - 96/12045 fällt erfindungsgemäß nicht nur der Brikettiervorgang, sondern im Stahlwerk auch der Einschmelzprozeß für Eisenschwamm weg.

Vorteilhaft werden feinteilchenförmiger und stückiger Eisenschwamm in die Einschmelzvergasungszone von oben im freien Fall eingebracht.

Es ist von besonderem Vorteil, wenn feinteilchenförmiger und stückiger Eisenschwamm wechselweise unter Bildung von in einem Kohlebett übereinanderliegenden Chargierlinsen in die Einschmelzvergasungszone eingebracht werden. Jede der so gebildeten Chargierlinsen ist entweder von feinteilchenförmigem Eisenschwamm oder von stückigem Eisenschwamm gebildet. Dies hat einen besonderen Vorteil für die Durchlässigkeit, d.h. die Durchgasbarkeit, der Schüttung in der Einschmelzvergasungszone, so daß eine Fertigreduktion und der Einschmelzvorgang wesentlich effizienter ablaufen können.

Zweckmäßig werden feinteilchenförmiger und stückiger Eisenschwamm über in eine Beruhigungszone oberhalb der Einschmelzvergasungszone ragende und in einem bestimmten Abstand von der Einschmelzvergasungszone endende Fallrohre in die Einschmelzvergasungszone eingebracht. Hierdurch wird die Materialoberfläche des in die Einschmelzvergasungszone zugeleiteten Materialstromes so klein gehalten, daß die Austauschfläche für Staubverlust durch Austragen von staubförmigem Material aus der Einschmelzvergasungszone minimiert wird.

Feinteilchenförmiger und stückiger Eisenschwamm werden gemäß einer weiteren Ausführungsvariante vorteilhaft vor Einbringung in die Einschmelzvergasungszone gemischt und im gemischten Zustand in die Einschmelzvergasungszone eingebracht, wobei zweckmäßig feinteilchenförmiger und stückiger Eisenschwamm in Form eines auf die Einschmelzvergasungszone auftreffenden kompakten Materialstromes, vorzugsweise mit einer Feststoffporosität von über 0,7, insbesondere mit einer Feststoffporosität zwischen 0,75 und 0,85, chargiert werden. Hierdurch wird eine Minimierung des Staubverlustes erreicht. Die Oberfläche des eingebrachten Materialstromes wird hierdurch ebenfalls klein gehalten und dadurch ebenfalls die Austauschfläche für den Staubverlust minimiert.

Vorzugsweise wird die Reduktion des feinteilchenförmigen eisenoxidhältigen Materials im Wirbelbettverfahren zwei- oder mehrstufig und die Reduktion des stückigen Erzes (Stückerz, Pellets, Sinter) in einem Reduktionsschachtofen durchgeführt.

Eine Anlage zur Durchführung des Verfahrens mit mindestens einem Wirbelschichtreaktor, wobei das feinteilchenförmige eisenoxidhältige Material den vom Reduktionsgas durchströmten Wirbelschichtreaktor unter Bildung von feinteilchenförmigem Eisenschwamm durchsetzt, und mit einem Festbett-Reduktionsreaktor für stückiges Eisenerz, einer vom Festbett-Reduktionsreaktor ausgehenden Förderleitung für den im Festbett-Reduktionsreaktor gebildeten stückigen Eisenschwamm, und mit einem Einschmelzvergaser, in den die den stückigen Eisenschwamm aus dem Festbett-Reduktionsreaktor führende Förderleitung mündet, und der Zuleitungen für sauerstoffhältige Gase und Kohlenstoffträger sowie einen Abstich für Roheisen bzw. Stahlvormaterial und Schlacke sowie eine in den Festbett-Reduktionsreaktor oder in den Wirbelschichtreaktor mündende Reduktionsgas-Zuleitung für im Einschmelzvergaser gebildetes Reduktionsgas aufweist, und mit einer Zuleitung für Reduktionsgas sowie mit einer vom Festbett-Reduktionsreaktor sowie vom Wirbelbertreaktor ausgehenden Exportgas-Ableitung, ist dadurch gekennzeichnet, daß eine Förderleitung für im Wirbelschichtreaktor gebildeten feinteilchenförmigen Eisenschwamm direkt, d.h. ohne Zwischenschaltung einer weiteren Behandlungsstation, in den Einschmelzvergaser mündet.

Zur Ermöglichung eines wechselweisen Chargierens des feinteilchenförmigen Eisenschwammes und des stückigen Eisenschwammes sind die Förderleitung für den im Festbett-Reduktionsreaktor gebildeten Eisenschwamm und die Förderleitung für den im Wirbelschichtreaktor gebildeten Eisenschwamm jeweils mit Dosiereinrichtungen, die auch ein Absperren der Förderleitungen ermöglichen, ausgestattet.

Um ein Mischen des feinteilchenförmigen und des stückigen Eisenschwammes vor Einbringung in den Einschmelzvergaser zu ermöglichen, sind die Förderleitung für den im Festbett-Reduktionsreaktor gebildeten Eisenschwamm und die Förderleitung für den im Wirbelschichtreaktor gebildeten Eisenschwamm leitungsmäßig miteinander verbunden und geht von der Verbindung dieser Förderleitungen eine für die beiden Reduktionsprodukte gemeinsame Förderleitung aus und mündet in den Einschmelzvergaser.

Vorzugsweise mündet eine vom Einschmelzvergaser ausgehende Reduktionsgas-Zuleitung sowohl in den Wirbelschichtreaktor als auch in den Festbett-Reduktionsreaktor.

Gemäß einer bevorzugten Ausführungsform sind zwei oder mehrere in Serie geschaltete Wirbelschichtreaktoren vorgesehen.

Die Erfindung ist nachfolgend anhand eines in der Zeichnung dargestellten Ausführungsbeispieles näher erläutert, wobei die Figur 1 ein Verfahrensschema des erfindungsgemäßen Verfahrens bzw. einer erfindungsgemäßen Anlage veranschaulicht. Die Figuren 2 bis 4 zeigen einen Einschmelzvergaser im Schnitt, und zwar die Figur 2 im Vertikal-Längsschnitt und die Figuren 3 und 4 jeweils im Querschnitt nach den Linien III-III und IV-IV.

Die Anlage weist drei in Serie hintereinander geschaltete Reduktionsreaktoren auf, die als Wirbelschichtreaktoren 1 bis 3 ausgebildet sind. Feinteilchenförmiges eisenoxidhältiges Material, z.B. Feinerz, wird über eine Erzzuleitung 4 dem ersten Wirbelschichtreaktor 1, in dem in einer Vorwärmstufe 5 eine Vorerwärmung des Feinerzes und eventuell eine Vor-Reduktion stattfinden, zugeleitet und anschließend von Wirbelschichtreaktor 1 zu Wirbelschichtreaktor 2, 3 über Förderleitungen 6 geleitet. In dem Wirbelschichtreaktor 2 erfolgt in einer Vor-Reduktionsstufe 7 eine Vor-Reduktion und im Wirbelschichtreaktor 3 in einer End-Reduktionsstufe 8 eine End- bzw. Fertig-Reduktion des Feinerzes zu feinteilchenförmigem Eisenschwamm jeweils mittels eines Prozeßgases.

Das fertigreduzierte Material, also der Eisenschwamm, wird über eine Förderleitung 9 in einen Einschmelzvergaser 10 geleitet. Im Einschmelzvergaser 10 wird in einer Einschmelzvergasungszone 11 aus Kohlenstoffträgern, wie Kohle, und sauerstoffhältigem Gas ein CO- und H₂-hältiges als Reduktionsgas dienendes Prozeßgas erzeugt, das über eine Reduktionsgas-Zuleitung 12 in den in Fließrichtung des Feinerzes letztangeordneten Wirbelschichtreaktor 3 eingeleitet wird. Das Reduktionsgas wird dann im Gegenstrom zum Erzdurchfluß von Wirbelschichtreaktor 3 zu Wirbelschichtreaktor 2 bis 1 geführt, u.zw. über die Verbindungsleitungen 13, aus dem Wirbelschichtreaktor 1 als Exportgas über eine Exportgas-Ableitung 14 abgeleitet und anschließend in einem Naßwäscher 15 gekühlt und gewaschen. Es kann sodann einem Verbraucher zugeleitet werden.

Der Einschmelzvergaser 10 weist eine Zuführung 16 für feste Kohlenstoffträger, eine Zuführung 17 für sauerstoffhältige Gase sowie gegebenenfalls Zuführungen für bei Raumtemperatur flüssige oder gasförmige Kohlenstoffträger, wie Kohlenwasserstoffe, sowie für gebrannte Zuschläge auf. In dem Einschmelzvergaser 10 sammelt sich unterhalb der Einschmelzvergasungszone 11 schmelzflüssiges Roheisen bzw. schmelzflüssiges Stahlvormaterial und schmelzflüssige Schlacke, die über einen Abstich 18 abgestochen werden.

In der Reduktionsgas-Zuleitung 12, die vom Einschmelzvergaser 10 ausgeht und in den Wirbelschichtreaktor 3 mündet, ist eine Entstaubungseinrichtung 19, wie ein Heißgaszyklon, vorgesehen, wobei die in diesem Zyklon abgeschiedenen Staubteile dem Einschmelzvergaser 10 über die Rückleitung 20, vorzugsweise mit Stickstoff als Fördermittel, und über einen Brenner 21 unter Einblasen von Sauerstoff zugeführt werden.

Eine Möglichkeit zur Einstellung der Reduktionsgastemperatur auf einen für den Reduktionsprozeß günstigen Temperaturbereich (etwa 700 bis 900°C) ergibt sich durch die vorzugsweise vorgesehene Gasrückführleitung 22, die von der Reduktionsgas-Zuleitung 12 ausgeht und einen Teil des Reduktionsgases über einen Wäscher 23 und einen Verdichter 24 in diese Reduktionsgas-Zuleitung 12 wiederum zurückführt, u.zw. vor der Anordnung des Heißgaszyklons 19.

Zur Einstellung der Vorerwärmungstemperatur des Feinerzes kann der Vorerwärmungsstufe 5, also dem Wirbelschichtreaktor 1, ein sauerstoffhältiges Gas, wie Luft oder Sauerstoff, über eine Leitung 25 zugeführt werden, wodurch eine Teilverbrennung des der Vorerwärmungsstufe 5 zugeführten umgesetzten Reduktionsgases stattfindet.

Im Einschmelzvergaser 10 erzeugtes Reduktionsgas wird erfindungsgemäß auch zur Erzeugung von stückigem Eisenschwamm eingesetzt. Hierzu wird in einen einen Festbett-Reduktionsreaktor 26 bildenden Schachtofen von oben über eine Fördereinrichtung, wie eine Förderleitung 27, stückiges Eisenerz und/oder Eisenerz in Pelletform über ein nicht dargestelltes Schleusensystem, gegebenenfalls zusammen mit Zuschlagstoffen, unter Bildung eines bewegten Festbettes, chargiert.

Unter bewegtem Festbett wird ein sich kontinuierlich bewegender Materialstrom verstanden, dessen sich bewegende Teilchen mit dem strömenden Reduktionsgas in Kontakt gelangen. Vorzugsweise kommt ein sich kontinuierlich infolge Schwerkraftwirkung nach unten bewegender Materialstrom zur Anwendung.

Als Festbett-Reduktionsreaktor kann anstelle eines Schachtofens 26 auch ein Reaktor mit Wanderrost oder ein Drehrohrofen vorgesehen sein.

Das im Schachtofen 26 in einer Reduktionszone 28 zu Eisenschwamm reduzierte Eisenerz wird zusammen mit den in der Reduktionszone 28 gebrannten Zuschlägen über vom Schachtofen 26 ausgehende Förderleitungen 29 abgeführt, beispielsweise mittels Austragsschnecken etc. An dem oberen Teil des Schachtofens 26 schließt eine Exportgas-Ableitung 30 für das in der Reduktionszone 28 aus Reduktionsgas entstehende Exportgas an. Das über die Exportgas-Ableitung 30 abgezogene Exportgas wird zunächst einer Reinigung in einem Wäscher 31 unterzogen, um es möglichst vollständig von Staubpartikeln zu befreien und den Wasserdampfgehalt zu erniedrigen, so daß es dann einer weiteren Verwendung zur Verfügung steht.

Wie aus der Figur zu entnehmen ist, münden die Förderleitung 9 aus dem Wirbelschichtreaktor 3 und die Förderleitung 29 aus dem Schachtofen 26, die jeweils mit Dosierorganen 32 ausgestattet sind, die auch ein Absperren der Leitungen ermöglichen, an den Mischstellen 33 zusammen. Hier bildet sich in den Förderleitungen ein kompakter Materialstrom aus feinteilchenförmigem und stückigem Eisenschwamm, der vorzugsweise eine Feststoffporosität von über 0,7, insbesondere 0,75 bis 0,85, aufweist. Dieser kompakte Materialstrom wird über die Förderleitungen 34, die im Dombereich 35 des Einschmelzvergasers 10 in diesen münden, weitergeleitet. Der Materialstrom fällt dann im freien Fall auf die Einschmelzvergasungszone 11, wobei ein Austragen von Feinteilchen durch das im Einschmelzvergaser 10 gebildete Reduktionsgas infolge der Kompaktheit des Materialstromes, die dieser infolge der guten Durchmischung der Feinteilchen mit den stückigen Eisenschwammteilchen aufweist, vermieden wird. Entscheidend ist das Kleinhalten der Oberfläche des Materialstromes und damit der Austauschfläche für den Staubverlust.

Aus dem Betrieb eines Festbett-Reduktionsreaktors ist bekannt, daß der Durchsatz bei einem Schachtofen problematisch ist, wenn im Reduktionsgas am Schachteintritt der Staubgehalt zu groß ist. Die Schüttung im Schachtofen wirkt wie ein Filter, wodurch eine ungleichmäßige Durchgasung des Schachtquerschnittes die Folge ist und der Druckverlust über der im Schachtofen befindlichen Materialsäule ansteigt. Der Schachtbetrieb kann völlig unmöglich werden, wenn die Materialsäule "hängt", weil der Druckverlust so hoch ist oder da sich Feststoffbrücken aus stückigem und staubförmigem Material über den Schachtquerschnitt aufbauen, so daß kein Absinken der Schachtsäule aufgrund des Eigengewichtes mehr erfolgt.

Bei Einbringung von stückigem Eisenschwamm aus einem Reduktionsschacht und von feinteilchenförmigem Eisenschwamm aus einer Wirbelschichtreduktion in einen gemeinsamen Einschmelzvergaser sind spezielle prozeß- und anlagentechnische Vorkehrungen von besonderem Vorteil, um den Staubgehalt des Reduktionsgases möglichst niedrig zu halten, der tendenziell durch das Chargieren des feinteilchenformigen Eisenschwammes ansteigt.

Gemäß einer bevorzugten Ausführungsform können sich die Förderleitungen 34 bis in das Innere des Einschmelzvergasers 10 fortsetzen und im vorbestimmten Abstand 36 oberhalb der Einschmelzvergasungszone 11 enden, so daß die freie Fallhöhe für den Materialstrom verkürzt ist. Der Staubverlust läßt sich hierdurch minimieren. Hierdurch erübrigt sich ein Agglomerieren des feinteilchenförmigen Eisenschwammes.

Gemäß einer weiteren bevorzugten Ausführungsvariante wird das feinkörnige Material zwischen grobkörnigem Material in Form von Linsen oder Schichten eingebettet. Um solche Linsen oder Schichten im Kohlebett aufzubauen, wird stückiges und feinkörniges Material wechselweise chargiert. Zu diesem Zweck wird das Chargieren des Eisenschwammes durch Betätigen der in den Förderleitungen 9 und 29 vorgesehenen Dosierorgane 32 gesteuert.

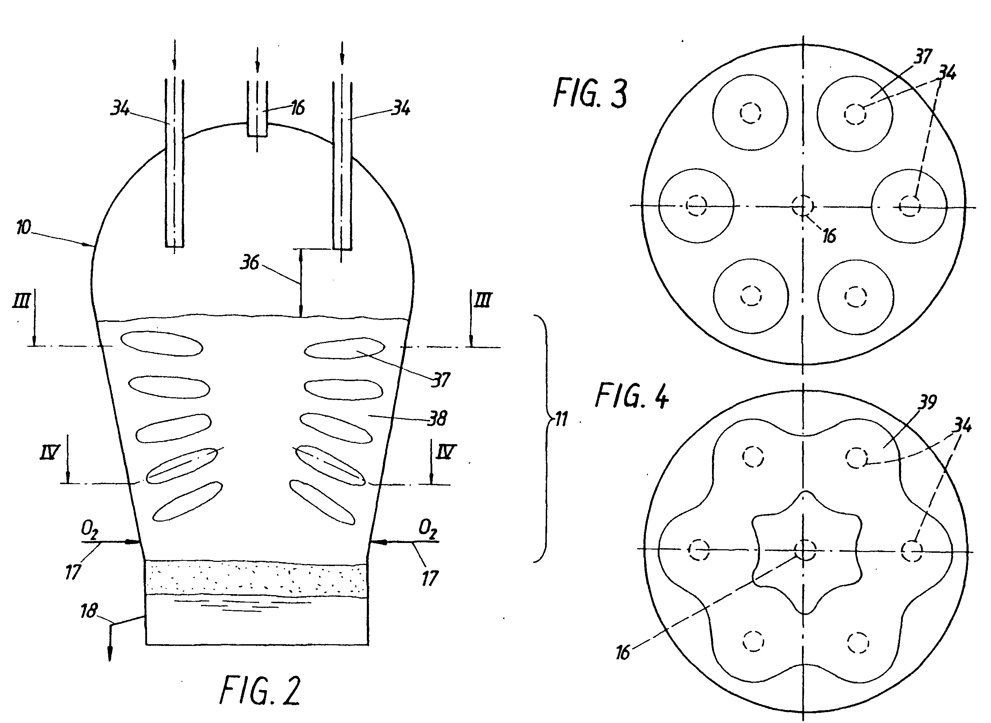

Eine solche Chargierung ist in den Figuren 2 bis 4 dargestellt. Hierbei erfolgt das Chargieren des feinteilchenförmigen Eisenschwamms in Linsenform, wobei die Eisenschwammlinsen 37 aus feinteilchenförmigem Eisenschwamm jeweils in einem Bett 38, gebildet aus Kohle und stückigem Eisenschwamm, eingebettet sind. Der Eisenschwamm kann aber auch gemischt, d.h. feinteilchenförmiger Eisenschwamm gleichzeitig mit stückigem Eisenschwamm, chargiert werden oder, wie oben beschrieben, wechselweise, d.h. feinteilchenförmiger Eisenschwamm getrennt von stückigem Eisenschwamm, wobei sowohl Linsen aus feinteilchenförmigem Eisenschwamm als auch Linsen aus stückigem Eisenschwamm in einem Kohlebett eingebettet sind. Wie aus den Figuren 3 und 4 ersichtlich ist, kommt es beim Absinken der Linsen 37 in der Einschmelzvergasungszone 11 zu einem Ineinanderfließen bzw. Ineinandergreifen der in einer Höhe liegenden Linsen, so daß sich der Eisenschwamm unterhalb eines bestimmten Niveaus in etwa Kreisringform 39 im Bett 38 befindet.

### Beispiel:

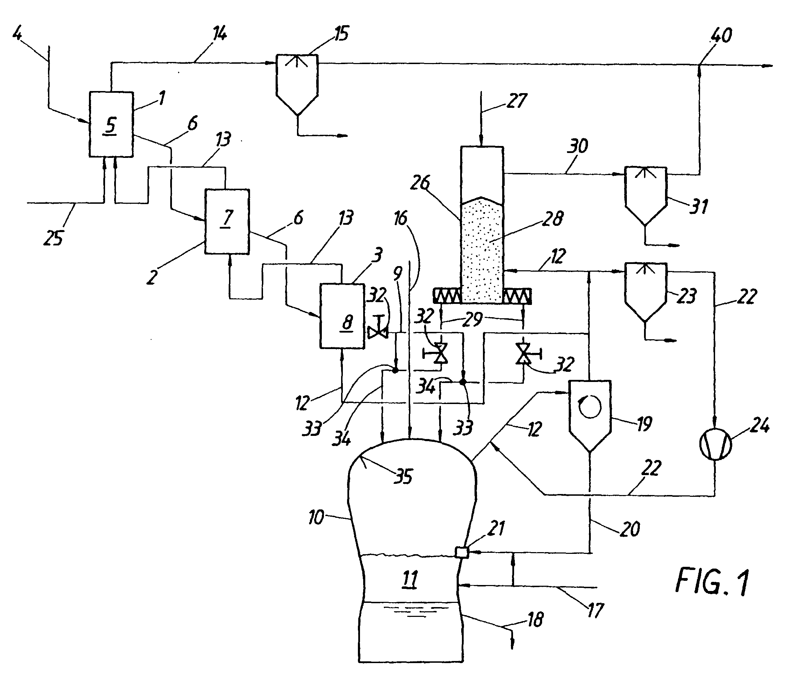

In einer der Figur 1 entsprechenden Anlage mit einer Produktionskapazität von 100 t/h Roheisen werden 78 t/h stückiges Erz und 78 t/h feinteilchenförmiges eisenoxidhältiges Material sowie 38 t/h Zuschläge eingesetzt. Weiters werden 104 t/h Kohle und 56.000 Nm³/h O₂ eingebracht.

Das in den Schachtofen 26 eingebrachte stückige Erz (hauptsächlich als Hämatit) weist eine in Tabelle I wiedergegebene chemische Zusammensetzung und eine in Tabelle II wiedergegebene Korngrößenverteilung auf:

**Tabelle I**

| | |
|---|---|
| Fe | 64,4 % |
| FeO | 0,23 % |
| SiO₂ | 3,04 % |
| LOI (loss of ignition) | 2,0 % |
| Feuchte | 1,0 % |

**Tabelle II**

| | |
|---|---|
| - 30 mm | 95 % |
| - 20 mm | 56% |
| - 10 mm | 20% |
| - 8 mm | 13% |

Das in den Wirbelschichtreaktor 1 eingebrachte feinteilchenförmige eisenoxidhältige Material (hauptsächlich als Hämatit) weist eine in Tabelle III wiedergegebene chemische Zusammensetzung und eine in Tabelle IV wiedergegebene Korngrößenverteilung auf:

**Tabelle III**

| | |
|---|---|
| Fe | 60,5 % |
| FeO | 0,19 % |
| SiO₂ | 6,6 % |
| LOI (loss of ignition) | 2,6 % |
| Feuchte | 1,0 % |

**Tabelle IV**

| | |
|---|---|
| - 8 mm | 100 % |
| - 5 mm | 83 % |
| - 1 mm | 45 % |
| - 0,5 mm | 37 % |
| - 0,25 mm | 27 % |
| - 0,125 mm | 16% |

Die chemische Zusammensetzung der trockenen Zuschläge ist in Tabelle V wiedergegeben:

**Tabelle V**

| | |
|---|---|
| CaO | 42,0 % |
| MgO | 9,0 % |
| SiO₂ | 1,0 % |
| Al₂O₃ | 0,5 % |
| Glühverluste | Rest |

Die chemische Zusammensetzung der in den Einschmelzvergaser 10 eingebrachten Kohle ist in Tabelle VI wiedergegeben:

**Tabelle VI**

| | |
|---|---|
| C | 74,0 % |
| H | 4,4 % |
| N | 1,7 % |
| O | 8,5 % |
| Asche | 11,0 % |
| C-fix | 56,3 % |

Das im Einschmelzvergaser 10 erschmolzene Roheisen weist eine chemische Zusammensetzung gemäß Tabelle VII auf:

**Tabelle VII**

| | |
|---|---|
| C | 4,2 % |
| Si | 0,3 % |
| Mn | 0,04 % |
| P | 0,04 % |
| S | 0,02 % |
| Fe | Rest |

Im Einschmelzvergaser 10 durch Kohlevergasung entstehendes Reduktionsgas fällt in einer Menge von 179.500 Nm³/h und in einer in Tabelle VIII wiedergegebenen Zusammensetzung an:

**Tabelle VIII**

| | |
|---|---|
| CO | 65,6 % |
| CO₂ | 2,5 % |
| H₂ | 25,7 % |
| H₂O | 1,5 % |
| CH₄ | 1,0% |
| N₂ + Ar | Rest |

Aus dem Wirbelschichtreaktor 1 durch die Exportgas-Ableitung 14 sowie aus dem Schachtofen 26 durch die Exportgas-Ableitung 30 abgezogenes Exportgas fällt nach Zusammenführung an der Zusammenführungsstelle 40 in einer Menge von 178.025 Nm³/h an und weist eine in Tabelle IX wiedergegebene Zusammensetzung auf:

**Tabelle IX**

| | |
|---|---|
| CO | 43,4 % |
| CO₂ | 31,3 % |
| H₂ | 17,8 % |
| H₂O | 2,0 % |
| CH₄ | 1,05 % |
| N₂ + Ar | Rest |

Durch die Kombination der Festbett-Reduktion und der Wirbelschicht-Reduktion kann ein gutes Teillastverhalten erreicht werden. Zur Aufrechterhaltung der Wirbelschicht muß eine weitgehend konstante Leerrohrgeschwindigkeit eingestellt werden, womit auch die Gasmenge konstant bleibt. Bei konstanter spezifischer Gasmenge (m³ Gas/t Erz) ist auch die Durchsatzleistung für Feinerz konstant. Die kombinierte Prozeßführung erzielt ihre Flexibilität hinsichtlich Teillast durch die Variierung/Reduzierung der Durchsatzleistung des Festbett-Reduktionsreaktors. Für den Festbettbetrieb ist es im Gegensatz zur Wirbelschicht nicht erforderlich, die Leerrohrgeschwindigkeit und damit auch die Gasmenge und Durchsatzleistung konstant zu halten.

Die Erfindung beschränkt sich nicht auf das in der Zeichnung dargestellte Ausführungsbeispiel, sondern sie kann in verschiedener Hinsicht modifiziert werden. Beispielsweise ist die Anzahl der Wirbelschichtzonen je nach Erfordernis frei wählbar. Auch ist es nicht unbedingt erforderlich, daß die Wirbelschicht-Reduktionsstufen und die Festbett-Reduktionsstufen von einer einzigen gemeinsamen Reduktionsgasquelle versorgt werden. Nach einer ebenfalls zur Erfindung gehörenden Variante könnte entweder das aus der Wirbelschicht-Reduktionsstufe stammende Exportgas oder auch das aus der Festbett-Reduktionsstufe stammende Exportgas für die Reduktion im Festbett bzw. der Wirbelschicht herangezogen werden, u.zw. nach einer Aufbereitung, d.h. CO₂-Eliminierung und Aufheizung.

## Patentansprüche

1. Verfahren zur Herstellung von flüssigem Roheisen oder flüssigen Stahlvorprodukten aus eisenoxidhältigem Material, wobei feinteilchenförmiges eisenoxidhältiges Material mit Hilfe eines Reduktionsgases in mindestens einer Wirbelschicht-Reduktionsstufe (7, 8) im Wirbelbettverfahren zu feinteilchenformigem Eisenschwamm und wobei weiters stückiges Erz in einer Festbett-Reduktionsstufe (28) zu stückigem Eisenschwamm reduziert wird und der Eisenschwamm in eine Einschmelzvergasungszone (11) eingebracht und dort unter Zufuhr von Kohlenstoffträgern und sauerstoffhältigem Gas erschmolzen wird, wobei ein CO- und H₂-hältiges Reduktionsgas zur Reduktion des eisenoxidhältigen Materials erzeugt wird, **dadurch gekennzeichnet, daß** der aus dem feinteilchenförmigen eisenoxidhältigen Material erzeugte feinteilchenförmige Eisenschwamm in unaufbereitetem Zustand und feinteilchenförmiger Form direkt in die Einschmelzvergasungszone (11) eingebracht und in dieser gemeinsam mit dem stückigen Eisenschwamm eingeschmolzen wird.

2. Verfahren nach Anspruch 1, **dadurch gekennzeichnet, daß** feinteilchenförmiger und stückiger Eisenschwamm in die Einschmelzvergasungszone (11) von oben im freien Fall eingebracht werden.

3. Verfahren nach Anspruch 1, **dadurch gekennzeichnet, daß** feinteilchenförmiger und stückiger Eisenschwamm wechselweise unter Bildung von in einem Kohlebett übereinanderliegenden Chargenlinsen in die Einschmelzvergasungszone (11) eingebracht werden.

4. Verfahren nach einem oder mehreren der Ansprüche 1 bis 3, **dadurch gekennzeichnet, daß** feinteilchenförmiger und stückiger Eisenschwamm über in eine Beruhigungszone oberhalb der Einschmelzvergasungszone (11) ragende und in einem bestimmten Abstand von der Einschmelzvergasungszone (11) endende Fallrohre in die Einschmelzvergasungszone (11) eingebracht werden.

5. Verfahren nach einem oder mehreren der Ansprüche 1 bis 4, **dadurch gekennzeichnet, daß** feinteilchenförmiger und stückiger Eisenschwamm vor Einbringung in die Einschmelzvergasungszone (11) gemischt und im gemischten Zustand in die Einschmelzvergasungszone (11) eingebracht werden.

6. Verfahren nach Anspruch 5, **dadurch gekennzeichnet, daß** feinteilchenförmiger und stückiger Eisenschwamm in Form eines auf die Einschmelzvergasungszone (11) auftreffenden kompakten Materialstromes, vorzugsweise mit einer Feststoffporosität von über 0,7, insbesondere mit einer Feststoffporosität zwischen 0,75 und 0,85, chargiert werden.

7. Verfahren nach einem oder mehreren der Ansprüche 1 bis 6, **dadurch gekennzeichnet, daß** die Reduktion des feinteilchenförmigen eisenoxidhältigen Materials im Wirbelbettverfahren zwei- oder mehrstufig und die Reduktion des stückigen Erzes in einem Reduktionsschachtofen (26) durchgeführt wird.

8. Anlage zur Durchführung des Verfahrens nach einem oder mehreren der Ansprüche 1 bis 7, mit mindestens einem Wirbelschichtreaktor (1, 2, 3), wobei das feinteilchenförmige eisenoxidhältige Material den vom Reduktionsgas durchströmten Wirbelschichtreaktor (1.2, 3) unter Bildung von feinteilchenförmigem Eisenschwamm durchsetzt, und mit einem Festbett-Reduktionsreaktor (26) für stückiges Eisenerz, einer vom Festbett-Reduktionsreaktor (26) ausgehenden Förderleitung (29) für den im Festbett-Reduktionsreaktor (26) gebildeten stückigen Eisenschwamm, und mit einem Einschmelzvergaser (10), in den die den stückigen Eisenschwamm aus dem Festbett-Reduktionsreaktor (26) führende Förderleitung (29) mündet, und der Zuleitungen (16, 17) für sauerstoffhältige Gase und Kohlenstoffträger sowie einen Abstich (18) für Roheisen bzw. Stahlvormaterial und Schlacke sowie eine in den Festbett-Reduktionsreaktor (26) oder in den Wirbelschichtreaktor (1, 2, 3) mündende Reduktionseas-Zuleitung (12) für im Einschmelzvergaser (10) gebildetes Reduktionsgas aufweist, und mit einer Zuleitung für Reduktionsgas sowie mit einer vom Festbett-Reduktionsreaktor (26) sowie vom Wirbelbettreaktor (1, 2, 3) ausgehenden Exportgas-Ableitung (14, 30), **dadurch gekennzeichnet, daß** eine Förderleitung (9) für im Wirbelschichtreaktor (1, 2, 3) gebildeten feinteilchenförmigen Eisenschwamm direkt, d.h. ohne Zwischenschaltung einer weiteren Behandlungsstation, in den Einschmelzvergaser (10) mündet.

9. Anlage nach Anspruch 8, **dadurch gekennzeichnet, daß** die Förderleitung (29) für den im Festbett-Reduktionsreaktor (26) gebildeten Eisenschwamm und die Förderleitung (9) für den im Wirbelschichtreaktor (1, 2, 3) gebildeten Eisenschwamm jeweils mit Dosiereinrichtungen (32), die auch ein Absperren der Förderleitungen (9, 29) ermöglichen, ausgestattet sind.

10. Anlage nach Anspruch 8 oder 9, **dadurch gekennzeichnet, daß** die Förderleitung (29) für den im Festbett-Reduktionsreaktor gebildeten Eisenschwamm und die Förderleitung (9) für den im Wirbelschichtreaktor (1, 2, 3) gebildeten Eisenschwamm leitungsmäßig miteinander verbunden sind und von der Verbindung dieser Förderleitungen (9, 29) eine für die beiden Reduktionsprodukte gemeinsame Förderleitung (34) ausgeht und in den Einschmelzvergaser (10) mündet.

11. Anlage nach einem oder mehreren der Ansprüche 8 bis 10, **dadurch gekennzeichnet, daß** eine vom Einschmelzvergaser (10) ausgehende Reduktionsgas-Zuleitung (12) sowohl in den Wirbelschichtreaktor (1, 2, 3) als auch in den Festbett-Reduktionsreaktor (26) mündet.

12. Anlage nach einem oder mehreren der Ansprüche 8 bis 11, **dadurch gekennzeichnet, daß** zwei oder mehrere in Serie geschaltete Wirbelschichtreaktoren (1, 2, 3) vorgesehen sind.

## Claims

1. A process for producing liquid pig iron or liquid primary steel products from material containing iron oxide, wherein finely particulate material containing iron oxide is reduced in the fluidized-bed process with the aid of a reducing gas in at least one fluidized-bed reduction stage (7, 8) to finely particulate sponge iron and wherein furthermore lumpy ore is reduced in a fixed-bed reduction stage (28) to lumpy sponge iron and the sponge iron is introduced into a melt-down/gasification zone (11) and is melted down there subject to supply of carbon carriers and oxygenous gas, whereby a reducing gas containing CO and H₂ is generated for the purpose of reducing the material containing iron oxide, **characterised in that** the finely particulate sponge iron which is generated from the finely particulate material containing iron oxide is introduced directly in the unconditioned state and in finely particulate form into the melt-down/gasification zone (11) and is melted down in the latter jointly with the lumpy sponge iron.

2. Process according to Claim 1, **characterised in that** finely particulate sponge iron and lumpy sponge iron are introduced into the melt-down/gasification zone (11) from above in free fall.

3. Process according to Claim 1, **characterised in that** finely particulate sponge iron and lumpy sponge iron are introduced alternately into the melt-down/gasification zone (11), forming superimposed charge lenses in a bed of coal.

4. Process according to one or more of Claims 1 to 3, **characterised in that** finely particulate sponge iron and lumpy sponge iron are introduced into the melt-down/ gasification zone (11) via downpipes projecting into a killing zone above the melt-down/gasification zone (11) and terminating at a certain spacing from the melt-down/gasification zone (11).

5. Process according to one or more of Claims 1 to 4, **characterised in that** prior to being introduced into the melt-down/gasification zone (11) finely particulate sponge iron and lumpy sponge iron are mixed and are introduced into the melt-down/gasification zone (11) in the mixed state.

6. Process according to Claim 5, **characterised in that** finely particulate sponge iron and lumpy sponge iron are charged in the form of a compact stream of material impinging on the melt-down/gasification zone (11), preferably with a solid-matter porosity of over 0.7, in particular with a solid-matter porosity between 0.75 and 0.85.

7. Process according to one or more of Claims 1 to 6, **characterised in that** reduction of the finely particulate material containing iron oxide is carried out in the fluidized-bed process in two or more stages and reduction of the lumpy ore is carried out in a reduction shaft furnace (26).

8. A plant for implementing the process according to one or more of Claims 1 to 7, with at least one fluidized-bed reactor (1, 2, 3), wherein the finely particulate material containing iron oxide permeates the fluidized-bed reactor (1, 2, 3) which is perfused by the reducing gas, forming finely particulate sponge iron, and with a fixed-bed reduction reactor (26) for lumpy iron ore, a conveying line (29) emanating from the fixed-bed reduction reactor (26) for the lumpy sponge iron which has been formed in the fixed-bed reduction reactor (26), and with a melt-down gasifier (10), into which the conveying line (29) guiding the lumpy sponge iron out of the fixed-bed reduction reactor (26) leads, and which exhibits supply lines (16, 17) for oxygenous gases and carbon carriers as well as a tap (18) for pig iron or steel raw material and slag as well as a reducing-gas supply line (12) leading into the fixed-bed reduction reactor (26) or into the fluidized-bed reactor (1, 2, 3) for reducing gas which has been formed in the melt-down gasifier (10), and with a supply line for reducing gas and also with an export-gas drainage channel (14, 30) emanating from the fixed-bed reduction reactor (26) and also from the fluidized-bed reactor (1, 2, 3), **characterised in that** a conveying line (9) for finely particulate sponge iron which has been formed in the fluidized-bed reactor (1, 2, 3) leads directly, i.e. without interposition of a further treatment station, into the melt-down gasifier (10).

9. Plant according to Claim 8, **characterised in that** the conveying line (29) for the sponge iron which has been formed in the fixed-bed reduction reactor (26) and the conveying line (9) for the sponge iron which has been formed in the fluidized-bed reactor (1, 2, 3) are each equipped with metering devices (32) which also enable the conveying lines (9, 29) to be shut off.

10. Plant according to Claim 8 or 9, **characterised in that** the conveying line (29) for the sponge iron which has been formed in the fixed-bed reduction reactor and the conveying line (9) for the sponge iron which has been formed in the fluidized-bed reactor (1, 2, 3) are connected to one another in line-mediated manner and a conveying line (34) for the two reduction products emanates from the'connection of these conveying lines (9, 29) and leads into the melt-down gasifier (10).

11. Plant according to one or more of Claims 8 to 10, **characterised in that** a reducing-gas supply line (12) emanating from the melt-down gasifier (10) leads both into the fluidized-bed reactor (1, 2, 3) and into the fixed-bed reduction reactor (26).

12. Plant according to one or more of Claims 8 to 11, **characterised in that** two or more fluidized-bed reactors (1, 2, 3) connected in series are provided.

## Revendications

1. Procédé pour la préparation de fer brut liquide, ou de produits précurseurs d'acier liquide à partir d'un matériau contenant de l'oxyde de fer, dans lequel un matériau contenant de l'oxyde de fer sous forme de fines particules est réduit à l'aide d'un gaz de réduction dans au moins un étage de réduction à lit tourbillonnaire (7, 8) suivant un procédé en lit tourbillonnaire pour former une mousse de fer à fines particules, et dans lequel du minerai en morceaux est réduit dans un étage de réduction à lit fixe (28) pour former une mousse de fer en morceaux, et la mousse de fer est introduite dans une zone de gazéification et de fusion (11) et mise dans celle-ci en fusion en apportant des produits d'apport de carbone et du gaz contenant de l'oxygène, de sorte que l'on produit un gaz de réduction contenant du CO- et du H₂- pour la réduction du matériau contenant de l'oxyde de fer, **caractérisé en ce que** la mousse de fer sous forme de fines particules produite à partir du matériau en fines particules contenant de l'oxyde de fer est introduite à l'état non préparé et sous forme de fines particules directement dans la zone de gazéification et de fusion (11) et est mise en fusion dans celle-ci conjointement avec la mousse de fer en morceaux.

2. Procédé selon la revendication 1, **caractérisé en ce que** la mousse de fer en fines particules et la mousse de fer en morceaux sont introduites en chute libre depuis le haut dans la zone de gazéification et de fusion (11).

3. Procédé selon la revendication 1, **caractérisé en ce que** la mousse de fer en fines particules et la mousse de fer en morceaux sont introduites en alternance dans la zone de gazéification et de fusion (11) en formant des lentilles de charge superposées dans un lit de charbon.

4. Procédé selon l'une ou plusieurs des revendications 1 à 3, **caractérisé en ce que** la mousse de fer en fines particules et la mousse de fer en morceaux sont introduites dans la zone de gazéification et de fusion (11) par l'intermédiaire d'un tube vertical qui pénètre dans une zone de repos au-dessus de la zone de gazéification et de fusion, et qui se termine à une certaine distance de la zone de gazéification et de fusion (11).

5. Procédé selon l'une ou plusieurs des revendications 1 à 4, **caractérisé en ce que** la mousse de fer en fines particules et la mousse de fer en morceaux sont mélangées avant l'introduction dans la zone de gazéification et de fusion (11) et sont introduites à l'état mélangé dans la zone de gazéification et de fusion (11).

6. Procédé selon la revendication 5, **caractérisé en ce que** la mousse de fer en fines particules et la mousse de fer en morceaux sont chargées sous la forme d'un flux de matériau compact qui atteint la zone de gazéification et de fusion (11), de préférence avec une porosité solide supérieure à 0,7, en particulier une porosité solide comprise entre 0,75 et 0,85.

7. Procédé selon l'une ou plusieurs des revendications 1 à 6, **caractérisé en ce que** la réduction du matériau en fines particules contenant de l'oxyde de fer est exécutée suivant un procédé en lit tourbillonnaire à deux ou plusieurs étages, et la réduction du minerai en morceaux est exécutée dans un haut-fourneau de réduction (26).

8. Installation pour mettre en oeuvre le procédé selon l'une ou plusieurs des revendications 1 à 7, comprenant au moins un réacteur à lit tourbillonnaire (1, 2, 3), dans laquelle le matériau en fines particules et contenant de l'oxyde de fer traverse le réacteur à lit tourbillonnaire (1, 2, 3) traversé par le gaz de réduction en formant une mousse de fer à fines particules, et comprenant un réacteur de réduction à lit fixe (26) pour du minerai de fer en morceaux, une conduite d'alimentation (29) partant du réacteur de réduction à lit fixe (26) pour la mousse de fer en morceaux formée dans le réacteur de réduction à lit fixe (26), et comprenant un gazéificateur de fusion (10) dans lequel débouche la conduite d'amenée (29) qui mène la mousse de fer en morceaux hors du réacteur de réduction à lit fixe (26), et les conduites d'amenée (16, 17) pour des gaz contenant de l'oxygène et pour des produits d'apport de carbone, ainsi qu'une percée (18) pour le fer brut, ou pour le matériau précurseur d'acier et pour le laitier, ainsi qu'une conduite d'amenée de gaz de réduction qui débouche dans le réacteur de réduction à lit fixe (26) ou dans le réacteur à lit tourbillonnaire (1, 2, 3) pour le gaz de réduction qui se forme dans le gazéificateur de fusion (10), et comprenant une conduite d'amenée pour du gaz de réduction ainsi qu'une conduite de dérivation de gaz exportés (14, 30) sortant du réacteur de réduction à lit fixe (26) ainsi que du réacteur à lit tourbillonnaire (1, 2, 3), **caractérisée en ce qu'**une conduite d'amenée (9) pour la mousse de fer en fines particules formée dans le réacteur à lit tourbillonnaire (1, 2, 3) débouche directement dans le gazéificateur de fusion (13), c'est-à-dire sans interposition d'une autre station de traitement.

9. Installation selon la revendication 8, **caractérisée en ce que** la conduite d'amenée (29) pour la mousse de fer formée dans le réacteur de réduction à lit fixe (26) et la conduite d'amenée (9) pour la mousse de fer formée dans le réacteur à lit tourbillonnaire (1,2, 3) sont équipées chacune de moyens de dosage (32) qui permettent également un isolement des conduites d'amenée (9, 29).

10. Installation selon l'une ou l'autre des revendications 8 et 9, caractérisée ce que la conduite d'amenée (29) pour la mousse de fer formée dans le réacteur de réduction à lit fixe et la conduite d'amenée (9) pour la mousse de fer formée dans le réacteur à lit tourbillonnaire (1, 2, 3) sont reliées l'une à l'autre en termes d'écoulement, et en ce que depuis la jonction de ces conduites d'amenée (9, 29) part une conduite d'amenée commune (34) pour les deux produits de réduction, qui débouche dans le gazéificateur de fusion (10).

11. Installation selon l'une ou plusieurs des revendications 8 à 10, **caractérisée en ce qu'**une conduite d'amenée de gaz de réduction (12) partant du gazéificateur de fusion (10) débouche à la fois dans le réacteur à lit tourbillonnaire (1, 2, 3) et dans le réacteur de réduction à lit fixe (26).

12. Installation selon l'une ou plusieurs des revendications 8 à 10, **caractérisée en ce qu'**il est prévu deux ou plusieurs réacteurs à lit tourbillonnaire (1, 2, 3) branchés en série.
